Europäisches Patentamt

European Patent Office

Office européen des brevets

(11) Veröffentlichungsnummer: **0 368 083**
**A2**

# (12) EUROPÄISCHE PATENTANMELDUNG

(21) Anmeldenummer: **89119867.3**

(22) Anmeldetag: **26.10.89**

(51) Int. Cl.⁵: **C08G 63/676, C09D 167/06**

(30) Priorität: **08.11.88 DE 3837783**

(43) Veröffentlichungstag der Anmeldung:
**16.05.90 Patentblatt 90/20**

(84) Benannte Vertragsstaaten:
**AT BE DE ES FR GB GR IT NL SE**

(71) Anmelder: **BAYER AG**

**D-5090 Leverkusen 1 Bayerwerk(DE)**

(72) Erfinder: **Meixner, Jürgen, Dr.**
**Josef-Brocker-Dyk 56**
**D-4150 Krefeld(DE)**
Erfinder: **Clemens, Horst D. I.**
**Flensburger Zeile 1F**
**D-4150 Krefeld(DE)**
Erfinder: **Sickert, Armin**
**Schreberstrasse 9**
**D-4150 Krefeld(DE)**

(54) **Verfahren zur herstellung von Beschichtungen.**

(57) Ein Verfahren zur Herstellung von Beschichtungen auf beliebigen Substraten unter Verwendung von Spachtelmassen und Aushärtung der Beschichtungen unter dem Einfluß von Infrarotstrahlen, wobei die Spachtelmassen als Bindemittel olefinisch ungesättigte Polyesterharze einer Viskosität bei 23°C von 2000 bis 5000 mPa.s aus A) 1,0 Mol einer ungesättigten Dicarbonsäurekomponente, B) 0,5 bis 1,2 Mol einer Diolkomponente, C) 0,5 bis 1,1 Mol einer ungesättigten Etherkomponente und D) 0 bis 0,55 Mol einer gesättigten, einwertigen Alkoholkomponente enthalten.

EP 0 368 083 A2

## Verfahren zur Herstellung von Beschichtungen

Die Erfindung betrifft ein neues Verfahren zur Herstellung von Beschichtungen auf beliebigen Substraten unter Verwendung von Spachtelmassen auf Basis von olefinisch ungesättigten Polyesterharzen und anschließende Härtung der Überzüge unter dem Einfluß von Infrarotstrahlung.

Ungesättigte Polyesterharze als Bindemittel für Spachtelmassen z.B. Autoreparaturspachtel, sind seit langem bekannt. Sie benötigen in der Regel jedoch reaktive Lösemittel, wie z.B. Styrol, als copolymerisierbare Monomere.

Eine Ausnahme bilden die in der DE-OS 3 409 271 beschriebenen Spachtelmassen, die auf ungesättigten Polyestern basieren, die so niedrige Viskositäten besitzen, daß sie die für Spachtelmassen charakteristischen hohen Füllstoffmengen aufnehmen können und in Abwesenheit von copolymerisierbaren Monomeren mit Hilfe von Peroxiden zu klebfreien Produkten gehärtet werden können. Die Aushärtung erfolgt im allgemeinen bei Raumtemperatur, wobei nach ca. 4 Stunden gut schleifbare Beschichtungen resultieren, die jedoch eine sehr niedrige Härte aufweisen.

Aufgabe der vorliegenden Erfindung war es ein neues Verfahren zur Herstellung von Überzügen unter Verwendung von Spachtelmassen zur Verfügung zu stellen, welches unter Verwendung von monomerenfreien Spachtelmassen in kurzer Zeit zu harten, jedoch gut schleifbaren Oberflächen führt.

Diese Aufgabe konnte mit der Bereitstellung des nachstehend näher beschriebenen erfindungsgemäßen Verfahren gelöst werden.

Gegenstand der Erfindung ist ein Verfahren zur Herstellung von Beschichtungen auf beliebigen Substraten durch Auftragen einer Spachtelmasse, welche als Bindemittel ein ungesättigtes Polyesterharz enthält und anschließende Aushärtung der so erhaltenen Beschichtung unter dem Einfluß von Infrarotstrahlen, dadurch gekennzeichnet, daß man als Spachtelmasse eine solche verwendet, die als Bindemittel ein monomerenfreies, olefinisch ungesättigtes Polyesterharz mit einer Viskosität von 2000 bis 5000 mPa.s bei 23° C aus

A) 1,0 Mol einer ungesättigten Dicarbonsäurekomponente, bestehend aus Maleinsäure, Maleinsäureanhydrid und/oder Fumarsäure,

B) 0,5 bis 1,2 Mol einer Diolkomponente, bestehend aus mindestens einem zweiwertigen Alkohol mit 2 bis 8 Kohlenstoffatomen,

C) 0,5 bis 1,1 Mol mindestens einer ungesättigten Etherkomponente, bestehend aus mindestens einer monofunktionellen Hydroxyverbindung, die eine oder mehrere ß,$\gamma$-ethylenisch ungesättigte Alkenylethergruppierungen im Molekül enthält, und

D) 0 bis 0,55 Mol einer Alkoholkomponente, bestehend aus mindestens einem gesättigten, einwertigen Alkohol mit 4 bis 10 Kohlenstoffatomen enthält.

Die in den erfindungsgemäß einzusetzenden Spachtelmassen vorliegenden Bindemittel stellen ungesättigte Polyesterharze aus den Komponenten A), B), C) und gegebenenfalls D) dar, wobei die genannten Komponenten in den genannten molaren Mengen zum Einsatz gelangen. Vorzugsweise werden pro Mol der Komponente A) 0,5 bis 1,1 Mol der Komponente B), 0,5 bis 1,0 Mol der Komponente C) und gegebenenfalls 0 bis 0,5 Mol der Komponente D) eingesetzt.

Bei der Komponente A) handelt es sich um Maleinsäure, Maleinsäureanhydrid und/oder Fumarsäure. Vorzugsweise wird Maleinsäureanhydrid als Komponente A) eingesetzt.

Bei der Komponente B) handelt es sich um mindestens einen zweiwertigen Alkohol mit 2 bis 8 Kohlenstoffatomen wie beispielsweise Ethylenglykol, Propandiol-1,2, Propandiol-1,3, Butandiol-1,4, Pentandiol-1,3, Hexandiol-1,6 und 2-Ethylhexandiol-1,6, vorzugsweise Ethylenglykol und Propandiol-1,2.

Bei der Komponente C) handelt es sich vorzugsweise um mindestens einen Allylether mehrwertiger Alkohole, in dem pro Molekül noch eine freie Hydroxylgruppe nicht verethert vorliegt wie z.B. Trimethylolpropandiallylether, Glycerindiallylether oder Pentaerythrittriallylether, vorzugsweise Trimethylolpropandiallylether.

Bei der Komponente D), die bei der Herstellung der Polyesterharze gegebenenfalls mitverwendet wird, handelt es sich um mindestens einen einwertigen Alkohol mit 4 bis 10 Kohlenstoffatomen im Molekül wie z.B. n-Butanol, n-Hexanol, Isooctanol, Benzylalkohol, Cyclohexanol, ß-Phenylethanol, vorzugsweise Benzylalkohol.

Die Herstellung der ungesättigten Polyester erfolgt nach bekannten Methoden, z.B. durch Schmelz- oder Azeotropveresterung der Alkohole und Säuren, vgl. "Methoden der organischen Chemie" (Houben-Weyl), 4. Auflage, Band 14/2, S. 1 bis 5, 21 bis 33, 40 bis 44, Georg Thieme Verlag, Stuttgart 1961.

Die ungesättigten Polyesterharze weisen ein, als Zahlenmittel $M_n$ bestimmtes, dampfdruckosmometrisch in Dioxan als Lösungsmittel ermittelbares Molekulargewicht von 500 bis 1200, eine Viskosität bei

2

23°C von 2000 bis 5000 mPa.s, und Säurezahlen von 5 bis 50, vorzugsweise 10 bis 40 mg KOH/g Substanz auf.

Um die ungesättigten Polyester vor unerwünschter vorzeitiger Vernetzung zu bewahren, empfiehlt es sich, bereits bei der Herstellung der Polyester 0,001 bis 0,1 Gew.-% Polymerisationsinhibitoren oder Antioxidantien zuzusetzen. Geeignete Stabilisatoren sind in "Methoden der organischen Chemie" (Houben-Weyl), 4. Auflage, Band 14/1, S. 433 ff, Georg Thieme Verlag, Stuttgart, 1961, beschrieben. Sehr gut geeignet ist z.B. p-Benzochinon in einer Konzentration von 0,01 bis 0,05 Gew.-%, bezogen auf Polyester.

Zur Herstellung der Spachtelmassen werden den ungesättigten Polyestern übliche Füllstoffe, vorzugsweise in Mengen von 100 bis 350 Gew.-%, bezogen auf Polyester, und Pigmente sowie Sikkative in üblichen Mengen zugesetzt.

Unter Sikkativen werden Cobalt- und Mangansalze von Säuren - wie Leinölfettsäuren, Tallölfettsäuren, Sojaölfettsäuren - von Harzsäuren - wie Abietinsäuren und Naphthensäuren - von Essigsäure oder Isooctansäure verstanden. Bevorzugt werden Cobaltoctoat und Cobaltnaphthenat.

Vorzugsweise werden diese Sikkative in Form von organischen Lösungen in solchen Mengen eingesetzt, daß der Metallgehalt, bezogen auf ungesättigten Polyester, 0,005 bis 1 Gew.-% entspricht.

Die Produkte können ohne zusätzlich copolymerisierbare Monomere oder Lösungsmittel zur Anwendung gelangen, da es sich um niedrigviskose Produkte handelt. Es ist aber selbstverständlich möglich, in Fällen, in denen eine noch niedrigere Viskosität gewünscht wird (Spritzspachtel), Monomere oder Lösungsmittel zuzugeben.

Außerdem werden den Spachtelmassen zur Aushärtung (Hydro)Peroxide zugesetzt. Beispiele sind tert.-Butylhydroperoxid, Pinanhydroperoxid, Cumolhydroperoxid, Methylethylketonperoxid, Cyclohexanonperoxid, Dibenzoylperoxid und tert.-Butylperbenzoat. Vorzugsweise werden diese (Hydro)Peroxide in Mengen von 0,5 bis 10 Gew.-%, bezogen auf ungesättigten Polyester, eingesetzt.

Nach der Verarbeitung der erfindungsgemäß zum Einsatz gelangenden Spachtelmassen nach üblichen Methoden erfolgt die Trocknung der resultierenden Beschichtungen mittels Infrarotstrahlung, wobei die Oberflächen der Spachtelmassen eine Temperatur von ca. 80 bis 110°C erreichen. Auf diese Weise ist eine einwandfreie Durchtrocknung der Flächengebilde innerhalb weniger Minuten unter Ausbildung von harten, einwandfrei schleifbaren Oberflächen möglich.

Beispiele

Die in der nachfolgenden Tabelle 1 aufgeführten Ausgangskomponenten wurden bei 160 bis 180°C unter einem Stickstoffstrom der Schmelzkondensation unterworfen, bis die angegebene Säurezahl erreicht war.

Die Spachtelmassen aus den ungesättigten Polyestern können in allen üblichen Mischaggregaten, wie Dissolver, Planetmischer, Zwangskneter, Butterfly-Mischer, hergestellt werden.

Die nachstehend beschriebenen Spachtelmassen werden im Dissolver wie folgt hergestellt:

Bei einem Behälter/Scheibendurchmesser-Verhältnis von ca. 2:1 werden Polyester, hochdisperse Kieselsäure und Pigment bei niedriger Umdrehungszahl vordispergiert und ca. 80 % der Füllstoffe zugegeben. Mit steigenden Drehzahlen (größere Randgeschwindigkeit) werden die restlichen Füllstoffe eingebracht.

Nach der Füllstoffzugabe wird bei dieser Arbeitsweise eine Temperatur von 35 bis 40°C erreicht. Die Zugabe der Cobaltoctoat-Lösung erfolgt nach Abkühlung auf 30°C.

Für die Spachtelherstellung wird folgende Rezeptur verwendet:

|  | Gew.-% |
|---|---|
| Polyester | 30,91 |
| Kieselsäure, hochdispers | 0,55 |
| Titandioxid (Rutiltyp) | 2,21 |
| Talkum | 44,12 |
| Schwerspat | 22,06 |
| Cobaltoctoat-Lösung (10 % Co-Gehalt) | 0,15 |
| Spachtelmasse | 100,00 |

Zur Prüfung der Aushärtbarkeit werden je 100 g Spachtelmasse mit 2 g Cyclohexanonperoxidpaste (50 %ig in Weichmacher) gemischt und auf ein entfettetes und geschliffenes Blech in einer Schichtdicke von 1

EP 0 368 083 A2

mm aufgetragen.

Danach wird dieses Blech vor einen mittelwelligen (2 x 1000 Watt) Infrarotstrahler (525° C Strahlertemperatur) im Abstand von 30 cm gelegt und 5 Minuten bestrahlt. Die Spachteloberfläche erreichte dabei eine Temperatur von ca. 100° C.

Nach 10 Minuten Abkühlen wird mittels Schleifpapiers (80er Körnung) mit der Hand geschliffen.

Beurteilung: Abrieb und Zusetzen des Schleifpapiers (von sehr gut bis nicht schleifbar).

Nach 1 Stunde wird die Pendelhärte (nach König, DIN 53 157) gemessen.

Die Ergebnisse sind in Tabelle 1 aufgeführt.

Tabelle 1

| | erfindungsgemäße Beispiele | | | | Vergleichsbeispiele | |
|---|---|---|---|---|---|---|
| | 1 | 2 | 3 | 4 | 1 | 2 |
| **Ausgangskomponenten (Mol)** | | | | | | |
| Maleinsäureanhydrid | 1,0 | 1,0 | 1,0 | 1,0 | 0,7 | 1,0 |
| Tetrahydrophthalsäureanhydrid | | | | | 0,3 | |
| Ethylenglykol | | | | 0,3 | | |
| Propandiol-1,2 | 0,65 | 0,65 | 1,1 | 0,35 | 0,65 | 0,65 |
| Trimethylolpropandiallylether | 1,0 | 0,6 | 1,0 | 0,6 | 1,0 | 0,4 |
| Benzylalkohol | | 0,4 | | 0,4 | | 0,6 |
| **Eigenschaften des Polyesters** | | | | | | |
| Säurezahl (mg KOH/ Substanz) | 23 | 21 | 31 | 22 | 30 | 19 |
| Viskosität (mPa.s/23° C) | 3000 | 3000 | 2500 | 3200 | 3600 | 3800 |
| **Eigenschaften des gehärteten Spachtels** | | | | | | |
| Pendelhärte (sec) | 61 | 57 | 60 | 75 | 20 | <10 |
| Schleifbarkeit | sehr gut | sehr gut | sehr gut | sehr gut | mäßig | nicht |

Während die ungesättigten Polyesterharze der erfindungsgemäßen Beispiele 1 bis 4 zu Spachtelmassen führen, die nach der Infrarothärtung gute Schleifbarkeit und geringes Zusetzen des Schleifpapiers bei guter Härte aufweisen, zeigen Vergleichsbeispiel 1 mit nicht erfindungsgemäßer Menge, an Maleinsäureanhydrid sowie Vergleichsbeispiel 2 mit nicht erfindungsgemäßer Menge an Trimethylolpropandiallylether schlechtere Eigenschaften.

**Ansprüche**

1. Verfahren zur Herstellung von Beschichtungen auf beliebigen Substraten durch Auftragen einer Spachtelmasse, welche als Bindemittel ein ungesättigtes Polyesterharz enthält und anschließende Aushärtung der so erhaltenen Beschichtung unter dem Einfluß von Infrarotstrahlen, dadurch gekennzeichnet, daß man als Spachtelmasse eine solche verwendet, die als Bindemittel ein monomerenfreies, olefinisch ungesättigtes Polyesterharz mit einer Viskosität von 2000 bis 5000 mPa.s bei 23° C aus

A) 1,0 Mol einer ungesättigten Dicarbonsäurekomponente, bestehend aus Maleinsäure, Maleinsäureanhydrid und/oder Fumarsäure,

B) 0,5 bis 1,2 Mol einer Diolkomponente, bestehend aus mindestens einem zweiwertigen Alkohol mit 2 bis 8 Kohlenstoffatomen,

C) 0,5 bis 1,1 Mol mindestens einer ungesättigten Etherkomponente, bestehend aus mindestens einer monofunktionellen Hydroxyverbindung, die eine oder mehrere ß,γ-ethylenisch ungesättigte Alkenylethergruppierungen im Molekül enthält, und

D) 0 bis 0,55 Mol einer Alkoholkomponente, bestehend aus mindestens einem gesättigten, einwertigen Alkohol mit 4 bis 10 Kohlenstoffatomen
enthält.

2. Verfahren gemäß Anspruch 1, dadurch gekennzeichnet, daß die Komponenten

4

B) in einer Menge von 0,5 bis 1,1 Mol,
C) in einer Menge von 0,5 bis 1,0 Mol
und
D) in einer Menge von 0 bis 0,5 Mol
pro Mol der Komponente A) vorliegen.